# FASCICULE DE BREVET EUROPEEN

(11) **EP 2 300 985 B1**
(45) Date de publication et mention de la délivrance du brevet: **23.07.2014**
(21) Numéro de dépôt: 09769502.7
(22) Date de dépôt: 29.05.2009
(51) Int. Cl.: G06T 7/00, G02B 21/36

(54) **PROCEDE D'ANALYSE CELLULAIRE D'UN PRELEVEMENT AU MOYEN D'UNE PLAQUE D'ANALYSE VIRTUELLE**
VERFAHREN ZUR PROBENZELLENANALYSE UNTER VERWENDUNG EINER VIRTUELLEN ANALYSEPLATTE
METHOD FOR SAMPLE CELL ANALYSIS USING A VIRTUAL ANALYSIS PLATE

(30) Priorité: 30.05.2008 FR 0802994
(43) Date de publication de la demande: 30.03.2011
(73) Titulaire: NOVACYT, 78140 Velizy Villacoublay (FR)
(72) Inventeur: PELTIER, Eric, F-92140 Clamart (FR)
(74) Mandataire: Blot, Philippe Robert Emile
(86) Numéro de dépôt international: PCT/FR2009/051014
(87) Numéro de publication internationale: WO 2009/156661

(56) Documents cités:
- WO-A-00/75709
- WO-A-01/84209
- US-A1- 2008 032 328
- US-B1- 6 441 894
- DOLINAR J ET AL: "The false-negative fraction: a statistical method to measure the efficacy of cervical smear screening laboratories" MILITARY MEDICINE, ASSOCIATION OF MILITARY SURGEONS OF THE US, BETHESDA, MD, US, vol. 164, no. 6, 1 juin 1999 (1999-06-01), pages 410-411, XP009110406 ISSN: 0026-4075

## Description

La présente invention concerne un procédé d'analyse cellulaire d'un prélèvement cytologique ou histologique disposé sur une plaque d'analyse, tel que décrit dans la revendication 1.

L'invention s'applique particulièrement à des procédés d'analyse cytologique ou histologique.

L'invention concerne également un procédé de préparation d'une plaque d'analyse virtuelle d'un prélèvement en vue de permettre son analyse cellulaire, notamment selon un procédé d'analyse tel que décrit ci-dessus.

L'analyse de prélèvements est par exemple utilisée pour le diagnostic de pathologies, par exemple à partir de cellules prélevées par frottis (cervicaux, vaginaux ou autres), par ponction d'organes (sein, thyroïde, ganglion ou autres) ou encore par recueil (urine, lavage broncho-alvéolaire ou autres), pour détecter tout type de pathologie et plus particulièrement des états pré cancéreux ou cancéreux.

Les prélèvements sont examinés par des observateurs spécialisés et entraînés pour détecter les cellules susceptibles d'être pathologiques dans un prélèvement disposé sur une plaque d'analyse, ou lame d'analyse. Afin de permettre la détection de cellules potentiellement pathologiques, le prélèvement subit un traitement, tel qu'une coloration permettant de mettre en évidence entre autres, les caractéristiques du noyau et du cytoplasme des cellules afin d'aider au repérage et au diagnostic des cellules pathologiques. Lorsque le prélèvement est observé, les cellules potentiellement pathologiques montrent alors des différences d'affinités tinctoriales, de taille et de forme, tant au niveau du noyau que du cytoplasme, par rapport aux cellules normales.

L'analyse peut se faire de façon manuelle, sans assistance particulière. Dans ce cas, le médecin ou le technicien spécialisé fait défiler des plaques de prélèvement sous un microscope et observe chacune d'entre elles en vue de détecter les anomalies morphologiques indiquant des cellules pathologiques pouvant correspondre à un état pré cancéreux ou cancéreux par exemple. Une telle méthode d'analyse est fastidieuse et consomme énormément de temps. En outre, elle n'offre pas de résultats satisfaisants avec surtout un nombre de « faux négatifs » estimés à environ 30%, c'est-à-dire de prélèvements considérés comme normaux alors qu'il existe une pathologie chez le patient, notamment pré cancéreuse ou cancéreuse avec les risques d'évolution ultérieure du cancer chez un patient rassuré à tort.

Pour améliorer les résultats des analyses, il a été proposé d'améliorer l'échantillonnage, c'est-à-dire le nombre de cellules, leur fixation, leur coloration et leur étalement sur la plaque d'analyse, mais aussi d'aider dans son analyse le médecin ou le technicien spécialisé par exemple grâce à des moyens informatiques d'analyse, tels que des logiciels de traitement d'images et autre.

A cet effet, une caméra ou un appareil de prise de vues est utilisé pour acquérir des images des différentes zones du prélèvement disposé sur la plaque d'analyse et communiquer les données de ces images à un système informatique qui travaille alors sur une plaque d'analyse « virtuelle ».

Ce système informatique permet un traitement du signal, un pré traitement des images et une analyse comparative des images avec éventuellement des bases de données nouvellement créées ou existantes afin d'accélérer le processus d'analyse et ainsi permettre l'analyse d'un plus grand nombre de prélèvements et afin d'assister le médecin ou le technicien spécialisé. Les images d'un prélèvement sont par exemple examinées automatiquement et si certaines zones présentant une anomalie sont relevées, les images correspondantes sont communiquées à un médecin ou le technicien spécialisé qui peut alors déterminer si oui ou non ces zones montrent des cellules pathologiques. Le médecin ou le technicien spécialisé n'observe donc plus que des zones anormales sans analyser les zones considérées comme normales par le système informatique. Un tel procédé permet effectivement d'accélérer l'analyse.

Cependant le médecin ou le technicien spécialisé n'a alors plus l'occasion d'observer des prélèvements normaux ou présentant des modifications morphologiques mineures, ce qui est préjudiciable à son appréciation des prélèvements et surtout pour sa courbe d'apprentissage voire la conservation de son acuité diagnostique. En effet, l'analyse de prélèvements repose sur la formation et la pratique du médecin ou du technicien spécialisé à examiner des prélèvements et à comparer des zones normales et des zones présentant des anomalies. Le fait de supprimer cette pratique par une analyse assistée par ordinateur peut mener les médecins ou techniciens spécialisés à perdre leurs compétences et ainsi entraîner des erreurs d'analyse.

L'invention vise à pallier les inconvénients mentionnés ci-dessus en proposant un procédé d'analyse qui, tout en étant assisté afin de permettre un gain de temps notable, permet également aux médecins ou techniciens spécialisés de s'entraîner à observer des prélèvements autant normaux qu'anormaux.

A cet effet, l'invention concerne un procédé d'analyse du type précité comprenant en outre les étapes suivantes :
- faire défiler automatiquement toutes les images acquises du prélèvement sur un moyen d'affichage à une vitesse de défilement prédéterminée, ladite vitesse étant agencée pour permettre à un observateur d'analyser l'image et de déterminer si la zone de prélèvement représentée comprend des cellules éventuellement pathologiques ou non,
- arrêter le défilement si au moins une anomalie pouvant signifier la présence d'une cellule pathologique est détectée,
et en ce que l'arrêt du défilement est réalisé de façon automatique suite à une analyse automatisée de l'image, ledit arrêt étant effectué si un objet particulier, défini comme étant anormal, est détecté dans l'image.

Ainsi, le médecin ou le technicien spécialisé observe aussi bien les zones normales que les zones anormales du prélèvement et l'analyse est plus rapide qu'une analyse manuelle du fait du défilement automatique des images relevées. En outre, le procédé selon l'invention permet de reconstituer intégralement l'image d'un prélèvement afin de s'affranchir de l'utilisation d'un microscope, et ce au moyen d'un appareil de prise de vue permettant une acquisition des images représentant la totalité de la surface de la plaque d'analyse, comme cela sera décrit ultérieurement.

Selon d'autres caractéristiques du procédé d'analyse :
- la vitesse de défilement des images est réglable,
- le procédé comprend en outre une étape de redémarrage du défilement après l'analyse de la zone du prélèvement présentant une anomalie, ladite étape de redémarrage étant commandée par l'observateur,
- le procédé comprend une étape d'arrêt automatique du défilement sur une image ne présentant pas d'anomalie ou correspondant à des objets nécessaires à l'évaluation de la représentativité du prélèvement, le redémarrage du défilement étant commandé par l'observateur après validation que l'image ne présente pas d'anomalie,
- deux traitements différents sont réalisés sur le prélèvement, lesdits traitements étant agencés pour permettre le marquage de cellules pathologiques parmi les cellules du prélèvement, deux étapes d'acquisition d'images étant effectuées, chaque étape d'acquisition permettant la détection d'anomalies selon un des traitements effectués sur le prélèvement, les données des images acquises par chaque étape d'acquisition étant superposées de sorte à permettre à l'observateur de passer de l'image d'une zone acquise selon une étape d'acquisition à l'image de la même zone acquise selon l'autre étape d'acquisition lors du défilement des images,
- le passage de l'image d'une zone selon une étape d'acquisition à l'image de la même zone acquise selon l'autre étape d'acquisition se fait lorsqu'une anomalie a été détectée dans l'image,
- les étapes de traitement sont des étapes de coloration ou de marquage par des fluorophores du prélèvement,
- l'affichage de l'image acquise selon l'autre étape d'acquisition est accompagné de l'affichage d'informations sur la zone du prélèvement affichée et/ou sur l'intégralité du prélèvement et/ou sur le patient sur lequel le prélèvement a été effectué,
- le procédé comprend une étape d'agrandissement d'une image afin de permettre le visionnage d'un détail de la zone affichée,
- le taux d'agrandissement est réglable.

L'invention concerne également un procédé de préparation d'une plaque d'analyse virtuelle d'un prélèvement en vue de permettre son analyse cellulaire du type comprenant les étapes suivantes :
- préparation d'un prélèvement,
- effectuer une première étape de traitement du prélèvement, ledit traitement permettant de marquer les cellules pathologiques par rapport aux autres cellules,
- effectuer une deuxième étape de traitement du prélèvement, ledit traitement permettant de marquer de façon différente de la première étape de traitement les cellules pathologiques par rapport aux autres cellules,
- déposer le prélèvement sur une plaque d'analyse avant ou après ou entre les étapes de traitement du prélèvement.

Ce procédé comprend en outre les étapes suivantes :
- effectuer une première acquisition d'images du prélèvement disposé sur la plaque d'analyse de sorte à obtenir une pluralité d'images représentant chacune une zone de la plaque d'analyse, lesdites images mises côte à côte formant une image de l'intégralité du prélèvement, lesdites images permettant la détection des cellules pathologiques marquées par la première étape de traitement,
- effectuer une deuxième acquisition d'images du prélèvement disposé sur la plaque d'analyse de sorte à obtenir une pluralité d'images représentant chacune une zone de la plaque d'analyse, lesdites images mises côte à côte formant une image de l'intégralité du prélèvement, lesdites images permettant la détection d'autres anomalies cellulaires que celles marquées par la première étape de traitement,
- lesdites images acquises formant une plaque d'analyse virtuelle.

Un tel procédé permet de réaliser de façon particulièrement simple une image d'un prélèvement permettant de détecter de deux façons différentes des cellules éventuellement pathologiques et d'acquérir un grand nombre d'informations sur le prélèvement, comme cela sera décrit ultérieurement.

Selon d'autre caractéristiques du procédé de préparation :
- le procédé comprend en outre une étape de superposition des données des images acquises lors de la première acquisition des images et celles des images acquises lors de la deuxième acquisition des images,
- la première étape de traitement du prélèvement est une étape de marquage fluorescent,
- la première étape de traitement comprend une étape d'introduction de billes de référence dans le prélèvement, lesdites billes servant de témoins pour la mise au point de l'acquisition d'images,
- la deuxième étape de traitement du prélèvement est une étape de coloration de Papanicolaou.

Une plaque d'analyse virtuelle obtenue par le procédé de préparation décrit ci-dessus est ensuite analysée par le procédé d'analyse décrit ci-dessus.

La demande internationale WO01/84209 décrit un procédé d'analyse de prélèvement cytologiques dans lequel une série d'images est assemblée de manière à former une seule grande image composite. L'image composite est ensuite présentée à un opérateur.

D'autres aspects et avantages de l'invention apparaîtront à la lecture de la description qui suit, donnée à titre d'exemple et faite en référence aux dessins annexés, dans lesquels :
- la Fig. 1 est une représentation schématique des différentes étapes d'un procédé de préparation d'une plaque d'analyse virtuelle selon l'invention,
- la Fig. 2 est un organigramme représentant les différentes étapes d'un procédé d'analyse cellulaire selon l'invention.

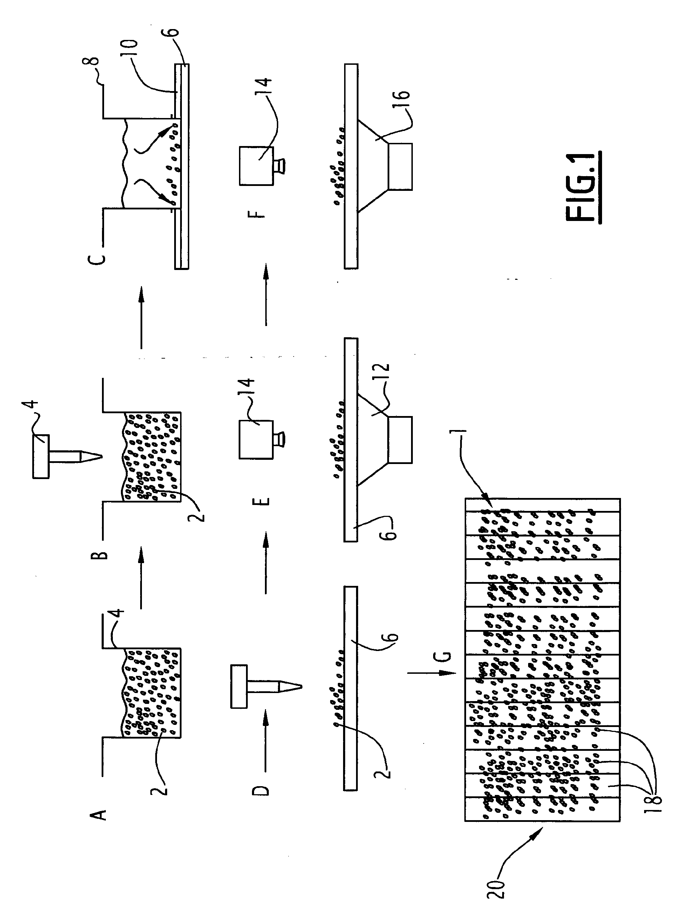

En référence à la Fig. 1, on décrit un procédé de préparation d'une plaque d'analyse virtuelle 1 en vue de son analyse cellulaire assistée par un système informatique. Par plaque virtuelle 1, on entend un ensemble d'informations et de données numériques regroupées concernant un prélèvement 2.

Le prélèvement 2 est par exemple obtenu par frottis (cervicaux, vaginaux ou autres), par ponction d'organes (sein, thyroïde, ganglion ou autres) ou encore par recueil (urine, lavage broncho-alvéolaire ou autres). Au cours d'une première étape A, le prélèvement est mis en suspension, par exemple dans un tube ou un flacon de prélèvement 4.

Au cours d'une étape B, le prélèvement subit un premier traitement visant à marquer les cellules pathologiques par rapport aux autres cellules. Selon un mode de réalisation, ce premier traitement est un marquage fluorescent qui permet non seulement de marquer les cellules pathologiques mais également de déterminer plusieurs caractéristiques du prélèvement. En effet, ce marquage fluorescent met en évidence une composante spécifique du noyau ou du cytoplasme et permet de faire ressortir l'un par rapport à l'autre dans le but de sélectionner les cellules potentiellement pathologiques. Un tel marquage permet, lorsqu'il est spécifique de l'ADN, de faire une quantification de l'ADN des cellules du prélèvement pour une analyse de la ploïdie par exemple, ou, lorsqu'il est spécifique d'une molécule ou d'un virus oncogènes, tel que le Human Papilloma Virus, dans le cas du frottis du col de l'utérus par exemple, de faire un ciblage des cellules potentiellement pathologiques.

Le marquage fluorescent est par exemple réalisé de façon automatique au moyen d'un automate 4 muni de moyens de pipetage utilisés à la fois pour la mise en solution du prélèvement et pour le mélange du prélèvement avec des molécules fluorescentes. Selon un mode de réalisation, des billes de référence sont introduites dans la solution du prélèvement 2. De telles billes sont marquées par une molécule fluorescente et permettent de faciliter la mise au point automatique lors de l'acquisition d'images du prélèvement, comme cela sera décrit ultérieurement.

Au cours d'une étape C, le prélèvement 2 marqué est disposé sur une plaque d'analyse 6. De façon connue, le dépôt des cellules sur la plaque 6 se fait par exemple par décantation. Le prélèvement 2 est versé dans une chambre de décantation 8 dont le fond est ouvert sur la plaque d'analyse 6. Des moyens d'absorption 10 permettent l'absorption de la solution au fur et à mesure que les cellules se déposent sur la plaque d'analyse 6. Un tel procédé de dépôt est connu et ne sera pas décrit en détail ici.

Au cours d'une étape D, le prélèvement 2 subit un deuxième traitement visant à colorer les cellules tel que classiquement décrit et connu pour une analyse morphologique par l'homme de l'art. Selon un mode de réalisation, ce deuxième traitement est une coloration de Papanicolaou. Une telle coloration est connue depuis longtemps et la sémiologie, largement décrite dans la littérature, permet la reconnaissance éventuelle d'anomalies correspondant par exemple à la présence de cellules pré cancéreuses ou cancéreuses. Cette coloration permet également la reconnaissance des différents types de cellules et de leur nombre afin de déterminer la qualité représentative du prélèvement et, par exemple de définir si le prélèvement est représentatif ou non. L'étape de coloration de Papanicolaou peut également être réalisée avec des moyens de pipetage automatiques.

L'étape de décantation de la suspension cellulaire peut être réalisée avant, après ou entre les étapes de marquage et de coloration décrites ci-dessus.

Les étapes décrites ci-dessus associant un marquage fluorescent et une coloration connue pour l'analyse cellulaire sont simples à réaliser et permettent d'obtenir un prélèvement facilement lisible et fournissent des informations complémentaires importantes sur le prélèvement. D'autres colorations utilisées dans l'état de la technique pourraient être utilisées, mais elles présentent des inconvénients. Ainsi, on pourrait envisager une coloration stoechiométrique, qui offre une coloration des cellules proportionnelle à la quantité d'ADN, ce qui permet sa quantification, et donc de repérer et d'analyser les cellules pathologiques dans le cadre de la ploïdie. Cependant, cette coloration particulière, lorsqu'il s'agit d'une coloration de Feulgen par exemple, est incompatible avec la coloration de Papanicolaou et nécessite donc de refaire un étalement cellulaire sur lame pour l'analyse du médecin ou du cytotechnicien. Certains industriels ont essayé d'associer une coloration stoechiométrique avec la coloration de Papanicolaou et ont donc utilisé une coloration renfermant une thionine et nécessitant une fixation au méthanol qui est toxique, et surtout qui modifie la coloration de Papanicolaou dans son interprétation, notamment avec des noyaux dont la chromatine apparaît trop « noire » pour une analyse fine de la composition des dits noyaux, et donc entraîne une difficulté d'analyse pour le diagnostic d'états pré cancéreux ou cancéreux.

Un marqueur différent des marqueurs utilisés pour la quantification d'ADN peut être utilisé, tel que l'hypéricine ou un marqueur spécifique de prolifération ou d'agent pathogènes, tels que des virus oncogènes du type Human Papilloma Virus, dans le cas du frottis du col de l'utérus par exemple.

Au cours d'une étape E, la plaque d'analyse 6 comprenant le prélèvement, renfermant un ou plusieurs marqueurs fluorescents spécifiques et coloré par un colorant connu pour l'analyse morphologique de la cellule ainsi que les billes fluorescentes de référence permettant d'améliorer la gestion de la mise au point, est soumis, une ou plusieurs fois, à une source de lumière excitatrice continue ou impulsionnelle de la fluorescence, cohérente ou non, dans n'importe quel domaine spectral allant de l'ultraviolet à l'infrarouge, illuminant le prélèvement afin de permettre d'acquérir des images du prélèvement au moyen d'un appareil d'acquisition d'images 14. L'acquisition d'images en fluorescence permet d'effectuer une mise au point automatique grâce aux billes fluorescentes de référence et ainsi d'obtenir le plus grand nombre d'images avec une mise au point optimale. L'ensemble des images du prélèvement obtenues en fluorescence, pouvant correspondre à un ou plusieurs éclairements de la source de lumière excitatrice de la fluorescence, permet de différencier les cellules normales des cellules pathologiques.

Au cours d'une étape F, la plaque d'analyse 6 comprenant le prélèvement, renfermant un ou plusieurs marqueurs fluorescents spécifiques et coloré par un colorant connu pour l'analyse morphologique de la cellule, est soumis à un éclairement en lumière blanche 16 afin d'acquérir des images du prélèvement au moyen du dispositif d'acquisition d'images 14. L'acquisition d'images en lumière blanche permet d'obtenir des images du prélèvement coloré par la coloration de Papanicolaou et faisant ressortir les critères diagnostiques standards qu'utilise l'homme de l'art pour faire un diagnostic.

L'acquisition d'images en fluorescence est réalisée avant l'acquisition d'images en lumière blanche afin d'éviter les phénomènes de blanchiment (ou « bleaching ») de l'image qui se produiraient lors de l'acquisition d'images en fluorescence si la plaque avait été préalablement éclairée en lumière blanche, ce qui gênerait l'exploitation des images en fluorescence.

L'appareil d'acquisition d'images 14 permet de « scanner » le prélèvement 2 avec une résolution très fine et d'obtenir à partir d'une même plaque des images en fluorescence ou en lumière blanche. La plaque d'analyse est scannée ligne par ligne. Ainsi, chaque image acquise représente une bande 18 de faible largeur de la plaque d'analyse. Les images mises côte à côte permettent d'obtenir une image 20 de l'intégralité de la plaque de prélèvement 6 et donc de l'intégralité du prélèvement 2, comme représenté à l'étape G de la Fig. 1. Une telle méthode d'acquisition d'images ligne par ligne est plus efficace que l'acquisition « champs par champs » employée jusqu'à présent et permet de standardiser la multiplicité des passages en fluorescence tout en diminuant le risque de blanchiment (ou « bleaching »). Ainsi, l'image 20, obtenue avec un seul et même appareil 14 et de façon très simple, est une représentation fidèle du prélèvement associant un grand nombre d'informations en fluorescence et en lumière blanche.

L'appareil d'acquisition d'images est par exemple du type « Nanozoomer » commercialisé par la société HAMAMATSU.

Les données numériques obtenues avec l'appareil 14 en fluorescence et en lumière blanche sont ensuite superposées par un système de traitement informatique afin que le système de traitement informatique puisse passer des données obtenues sous un éclairement aux données obtenues sous l'autre éclairement pour chaque bande 18 de l'image du prélèvement.

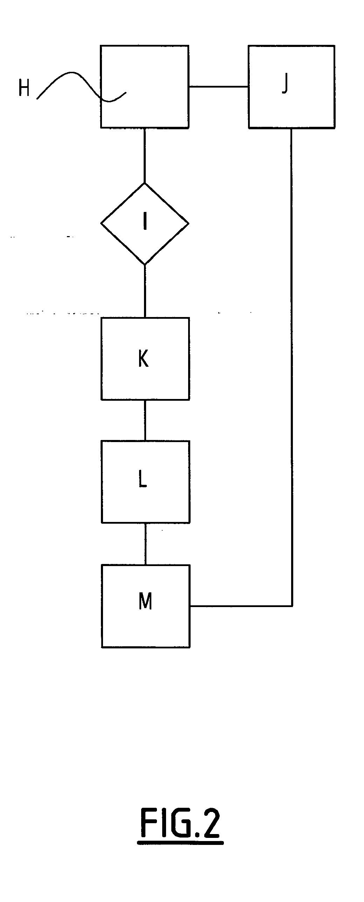

On obtient ainsi une plaque d'analyse virtuelle formée de l'image 20 et de données associées à cette image et qui peut être analysée par un procédé d'analyse cellulaire qui va à présent être décrit en référence à la Fig. 2.

L'analyse cellulaire se fait par un examen des images du prélèvement 2 par le médecin ou le technicien spécialisé chargé de détecter les cellules pathologiques, pour proposer un diagnostic qui déclenchera éventuellement des examens plus approfondis voire un traitement. Pour des raisons de sécurité, la présence du médecin ou du technicien spécialisé est obligatoire de sorte que la détection de cellules éventuellement pathologiques ne peut pas être entièrement automatisée.

Au cours d'une étape H, les images colorées par une coloration standard, telle que celle de Papanicolaou et acquises en lumière blanche, sont projetées sur un moyen d'affichage tel qu'un écran et défilent sous les yeux du médecin ou du technicien spécialisé pour examen. Le défilement des images est organisé par le système informatique et se fait donc de manière automatique. Chaque image est affichée plein champ sans affichage de données complémentaires sur le patient afin d'éviter de disperser l'attention du médecin ou du technicien spécialisé lors de l'analyse (ou « screening » en anglais), et ce pendant un temps prédéterminé calculé pour permettre au médecin ou au technicien spécialisé d'observer l'intégralité de chaque image projetée et de détecter une éventuelle anomalie dans une image.

Le temps d'affichage de chaque image peut être réglé par le médecin ou le technicien spécialisé en fonction de ses compétences ou en fonction d'autres informations. Par exemple, si le prélèvement a été effectué pour un patient « à risque » ayant une plus grande probabilité de présenter des cellules pathologiques, le temps d'affichage peut être réglé pour être plus long afin d'effectuer un examen plus minutieux du prélèvement. Les informations sur le patient peuvent être associées à la plaque d'analyse virtuelle en entrant ces informations dans une base de données et en les associant à l'image 20 du prélèvement correspondant au patient sur lequel ce prélèvement a été effectué. Les temps d'affichage peut être réglé automatiquement en fonction de ces informations. Par exemple, le système informatique comprend une pluralité de temps d'affichage préréglés et correspondant chacun à un degré de risque de détecter une anomalie sur le patient. Ce degré de risque est renseigné par le praticien effectuant le prélèvement et est attaché au prélèvement effectué. Ainsi, le système informatique relève le degré de risque et règle le temps d'affichage en conséquence. Le temps d'affichage peut également être réglé manuellement par le médecin ou le technicien spécialisé.

Les images qui défilent sont donc celles qui ont été acquises avec la coloration de Papanicolaou. Les images sous cette coloration permettent de détecter la présence éventuelle d'anomalies correspondant par exemple à la présence de cellules pré cancéreuses ou cancéreuses et dont la sémiologie connue depuis longtemps est largement décrite dans la littérature. En outre, comme indiqué plus haut, la coloration de Papanicolaou permet de vérifier si le prélèvement répond bien aux critères de Bethesda, dans le cadre du frottis du col de l'utérus par exemple, et est donc un prélèvement valable ou non. Les critères de Bethesda peuvent être vérifiés de façon automatique par le système informatique au moyen d'un logiciel d'analyse d'images. Ce logiciel peut par exemple effectué un comptage des cellules sur l'image 20 afin de vérifier si au moins 5000 cellules ont bien été prélevées et si certains types de cellules témoin de la bonne qualité du prélèvement, telles que des cellules endocervicales ou de la jonction, ont été prélevés. Le logiciel peut également acquérir d'autres informations sur l'étalement cellulaire. Ces informations sont rattachées à l'image 20 par le système informatique pour compléter la plaque d'analyse virtuelle.

Le médecin ou le technicien spécialisé observe chaque image affichée, à l'écran, et détermine si une anomalie est présente ou non à l'étape I. Cette détection peut également être effectuée de manière automatique par le système informatique au moyen du logiciel d'analyse d'images.

Dans le cas où ni le médecin ou le technicien spécialisé, ni le système informatique ne détecte d'anomalie dans l'image affichée, le procédé retourne à l'étape H et se poursuit par la projection de l'image suivante après l'écoulement du temps d'affichage réglé.

Selon un mode de réalisation, une étape J est prévue, au cours de laquelle le système informatique arrête automatiquement le défilement des images sur une image sur laquelle aucune anomalie n'est détectée et attend une validation du médecin ou du technicien spécialisé pour redémarrer le défilement. L'arrêt sur une telle image permet d'analyser en détail des images dites de référence afin de confirmer ce qui est considéré comme un prélèvement normal. L'arrêt sur des images dites normales peut se faire de façon aléatoire ou au bout d'un certain nombre d'images affichées. La description de l'analyse détaillée d'une image est faite ci-dessous en relation avec l'analyse d'une image présentant une anomalie.

Si une anomalie est détectée par le médecin ou le technicien spécialisé et/ou le système informatique au cours de l'étape I, le procédé se poursuit à l'étape K par l'interruption du défilement des images.

L'interruption du défilement est réalisée de façon automatique par le système informatique si celui-ci détecte une anomalie, ou de façon manuelle par le médecin ou le technicien spécialisé s'il souhaite observer une image plus en détail ou s'il repère une anomalie.

L'image est alors affichée avec un taux d'agrandissement supérieur afin de visualiser l'anomalie en détail. Des informations sur le patient peuvent alors être affichées simultanément afin de fournir une aide supplémentaire à la décision du médecin.

Le procédé selon l'invention permet un arrêt automatique du défilement des images sur une image montrant des éléments éventuellement pathologiques. Le procédé permet donc de diminuer le taux de faux négatifs et d'augmenter par conséquent la sensibilité de la détection des prélèvements pathologiques, correspondant à des anomalies des cellules qui auraient pu échapper à la vigilance du médecin ou du technicien spécialisé, du fait que le système informatique sélectionne les cellules pathologiques sur les images acquises en fluorescence aussi bien qu'en lumière blanche, contrairement au médecin ou au technicien spécialisé dont la première analyse ne repose que sur les images en lumière blanche, c'est-à-dire les images du prélèvement coloré par la coloration de Papanicolaou.

Au cours d'une étape L, l'image affichée sous coloration de Papanicolaou, et pour laquelle le défilement a été interrompu, est associée à l'image de la même zone prise en fluorescence afin d'analyser le prélèvement marqué par des fluorophores, au plan morphologique et/ou spectral. Cet affichage permet au médecin ou au technicien spécialisé d'affiner son analyse des cellules affichées et de confirmer ou non si certaines sont éventuellement pathologiques. En outre, avec l'affichage de l'image en fluorescence, d'autres informations peuvent être affichées simultanément, telles que des données quantitatives, des spectres ou des informations sur le patient sur lequel le prélèvement a été effectué, etc. Cette analyse plus fine couplée à l'arrêt automatisé du défilement permet de diminuer le nombre de faux négatifs. De plus, dans le cadre du frottis du col de l'utérus par exemple, le contrôle du diagnostic par le médecin ou le technicien spécialisé des zones sélectionnées par le système permet de conserver le niveau de spécificité du diagnostic cytologique qui est proche de 95% dans ce cas. De ce fait, les critères de sensibilité et de spécificité du frottis de dépistage deviennent plus proches et élevés.

Au cours de cette étape, le médecin ou le technicien spécialisé peut librement effectuer un grossissement de zones particulières de l'image affichée, aussi bien en lumière blanche qu'en fluorescence. Le médecin ou le technicien spécialisé peut également basculer de l'image sous coloration de Papanicolaou à l'image en fluorescence comme bon lui semble.

Le redémarrage du défilement ne peut être commandé que par le médecin ou le technicien spécialisé au cours d'une étape M, par exemple par une action sur un bouton de validation. Ceci permet de s'assurer que si le défilement a été interrompu de façon automatique, l'image affichée et présentant éventuellement une anomalie a bien été examinée par un médecin ou un technicien spécialisé, permettant d'assurer la chaîne de sécurité, composant principal de l'assurance qualité. Il en est de même pour les images normales affichées au cours de l'étape J décrite antérieurement.

Le procédé décrit ci-dessus permet une analyse rapide et efficace de prélèvements. Ce procédé diminue le risque de « faux négatifs » en obligeant à une analyse approfondie des images présentant une éventuelle anomalie.

En outre, l'entraînement des médecins ou techniciens spécialisés est préservé puisque toutes les images sont affichées, aussi bien les images normales que les images présentant des anomalies. Le procédé permet en outre de grande possibilité de manipulations notamment par l'association des informations sur le patient et sur le prélèvement aux données des images affichées.

## Revendications

1. Procédé d'analyse cellulaire d'un prélèvement cytologique ou histologique (2) disposé sur une plaque d'analyse (6), comprenant les étapes suivantes :
- réaliser au moins un premier traitement du prélèvement (2), ledit traitement étant agencé pour permettre de différencier les cellules pathologiques des cellules saines du prélèvement,
- effectuer une acquisition d'images du prélèvement (2) disposé sur la plaque d'analyse (6) de sorte à obtenir une pluralité d'images représentant chacune une zone de la plaque d'analyse (6), lesdites images mises côte à côte formant une image (20) de l'intégralité du prélèvement,
- faire défiler automatiquement toutes les images acquises du prélèvement (2) sur un moyen d'affichage à une vitesse de défilement prédéterminée, ladite vitesse étant agencée pour permettre à un observateur d'analyser l'image et de déterminer si la zone de prélèvement représentée comprend des cellules éventuellement pathologiques ou non,
- arrêter le défilement si au moins une anomalie pouvant signifier la présence d'une cellule pathologique est détectée, **caractérisé en ce que** l'arrêt du défilement est réalisé de façon automatique suite à une analyse automatisée de l'image, ledit arrêt étant effectué si un objet particulier, défini comme étant anormal, est détecté dans l'image,
et **en ce que** deux traitements différents sont réalisés sur le prélèvement (2), lesdits traitements étant agencés pour permettre le marquage de cellules pathologiques parmi les cellules du prélèvement, deux étapes d'acquisition d'images étant effectuées, chaque étape d'acquisition permettant la détection d'anomalies selon un des traitements effectués sur le prélèvement, les données des images acquises par chaque étape d'acquisition étant superposées de sorte à permettre à l'observateur de passer de l'image d'une zone acquise selon une étape d'acquisition à l'image de la même zone acquise selon l'autre étape d'acquisition lors du défilement des images.

2. Procédé d'analyse selon la revendication 1, **caractérisé en ce que** la vitesse de défilement des images est réglable.

3. Procédé d'analyse selon la revendication 1 ou 2, **caractérisé en ce qu'**il comprend en outre une étape de redémarrage du défilement après l'analyse de la zone du prélèvement présentant une anomalie, ladite étape de redémarrage étant commandée par l'observateur.

4. Procédé d'analyse selon l'une quelconque des revendications 1 à 3, **caractérisé en ce qu'**il comprend une étape d'arrêt automatique du défilement sur une image ne présentant pas d'anomalie ou correspondant à des objets nécessaires à l'évaluation de la représentativité du prélèvement, le redémarrage du défilement étant commandé par l'observateur après validation que l'image ne présente pas d'anomalie.

5. Procédé d'analyse selon l'une quelconque des revendications 1 à 4, **caractérisé en ce que** le passage de l'image d'une zone selon une étape d'acquisition à l'image de la même zone acquise selon l'autre étape d'acquisition se fait lorsqu'une anomalie a été détectée dans l'image.

6. Procédé d'analyse selon l'une quelconque des revendications 1 à 5, **caractérisé en ce que** les étapes de traitement sont des étapes de coloration ou de marquage par des fluorophores du prélèvement.

7. Procédé d'analyse selon la revendication 5, **caractérisé en ce que** l'affichage de l'image acquise selon l'autre étape d'acquisition est accompagné de l'affichage d'informations sur la zone du prélèvement affichée et/ou sur l'intégralité du prélèvement et/ou sur le patient sur lequel le prélèvement a été effectué.

8. Procédé d'analyse selon l'une quelconque des revendications 1 à 7, **caractérisé en ce que** il comprend une étape d'agrandissement d'une image afin de permettre le visionnage d'un détail de la zone affichée.

9. Procédé d'analyse selon la revendication 8, **caractérisé en ce que** le taux d'agrandissement est réglable.

10. Procédé de préparation d'une plaque d'analyse virtuelle d'un prélèvement (2) en vue de permettre son analyse cellulaire selon le procédé d'analyse selon l'une quelconque des revendications 1 à 9, ledit procédé comprenant les étapes suivantes :
- préparation d'un prélèvement (2),
- effectuer une première étape de traitement du prélèvement, ledit traitement permettant de marquer les cellules pathologiques par rapport aux autres cellules,
- effectuer une deuxième étape de traitement du prélèvement, ledit traitement permettant de marquer de façon différente de la première étape de traitement les cellules pathologiques par rapport aux autres cellules,
- déposer le prélèvement (2) sur une plaque d'analyse (6) avant ou après ou entre les étapes de traitement du prélèvement (2),
**caractérisé en ce qu'**il comprend en outre les étapes suivantes :
- effectuer une première acquisition d'images du prélèvement (2) disposé sur la plaque d'analyse (6) de sorte à obtenir une pluralité d'images représentant chacune une zone de la plaque d'analyse, lesdites images mises côte à côte formant une image (20) de l'intégralité du prélèvement, lesdites images permettant la détection des cellules pathologiques marquées par la première étape de traitement,
- effectuer une deuxième acquisition d'images du prélèvement (2) disposé sur la plaque d'analyse (6) de sorte à obtenir une pluralité d'images représentant chacune une zone de la plaque d'analyse (6), lesdites images mises côte à côte formant une image (20) de l'intégralité du prélèvement, lesdites images permettant la détection d'autres anomalies cellulaires que celles marquées par la première étape de traitement,
- lesdites images acquises formant une plaque d'analyse virtuelle.

11. Procédé de préparation selon la revendication 10, **caractérisé en ce qu'**il comprend en outre une étape de superposition des données des images acquises lors de la première acquisition des images et celles des images acquises lors de la deuxième acquisition des images.

12. Procédé de préparation selon la revendication 10 ou 11, **caractérisé en ce que** la première étape de traitement du prélèvement est une étape de marquage fluorescent.

13. Procédé de préparation selon la revendication 12, **caractérisé en ce que** la première étape de traitement comprend une étape d'introduction de billes de référence dans le prélèvement, lesdites billes servant de témoins pour la mise au point de l'acquisition d'images.

14. Procédé de préparation selon l'une quelconque des revendications 10 à 13, **caractérisé en ce que** la deuxième étape de traitement du prélèvement est une étape de coloration de Papanicolaou.

15. Procédé d'analyse cellulaire selon l'une quelconque des revendications 1 à 9, **caractérisé en ce que** l'analyse se fait sur une plaque d'analyse virtuelle obtenue par un procédé de préparation selon l'une quelconque des revendications 10 à 14.

## Patentansprüche

1. Verfahren zur Zellanalyse einer zytologischen oder histologischen Probenentnahme (2), die auf einer Analyseplatte (6) angeordnet ist, folgende Schritte umfassend:
- Durchführen mindestens einer ersten Behandlung der Probe (2), wobei die Behandlung vorgesehen ist, die pathologischen Zellen von den gesunden Zellen der Probe unterscheiden zu können,
- Durchführen einer Beschaffung von Bildern der Probe (2), die auf der Analyseplatte (6) angeordnet ist, um eine Mehrzahl von Bildern zu erhalten, die jeweils eine Zone der Analyseplatte (6) darstellen, wobei die Seite an Seite gelegten Bilder ein Bild (20) der Gesamtheit der Probe bilden,
- automatisch alle beschafften Bilder der Probe (2) auf einem Anzeigemittel mit einer vorbestimmten Blättergeschwindigkeit durchblättern lassen, wobei die Geschwindigkeit vorgesehen ist, einem Beobachter zu ermöglichen, das Bild zu analysieren und zu bestimmen, ob die dargestellte Zone der Probe gegebenenfalls pathologische Zellen enthält oder nicht,
- Anhalten des Durchblätterns, wenn mindestens eine Anomalie, die das Vorhandensein einer pathologischen Zelle angeben könnte, detektiert wird,
**dadurch gekennzeichnet, dass**
das Anhalten des Durchblätterns automatisch im Anschluss auf eine automatisierte Analyse des Bildes durchgeführt wird, wobei das Anhalten ausgeführt wird, wenn ein besonderes Objekt, das als anomal definiert ist, in dem Bild detektiert wird,
und dass zwei unterschiedliche Behandlungen an der Probe (2) realisiert werden, wobei die Behandlungen vorgesehen sind, die Markierung von pathologischen Zellen unter den Zellen der Probe zu gestatten, wobei zwei Schritte der Beschaffung von Bildern durchgeführt werden und jeder Beschaffungsschritt die Detektion von Anomalien gemäß einer der an der Probe durchgeführten Behandlungen ermöglicht, wobei die Daten der durch jeden Beschaffungsschritt beschafften Bilder übereinandergelegt werden, um dem Beobachter zu gestatten, bei dem Durchblättern der Bilder von dem Bild einer gemäß einem Beschaffungsschritt beschafften Zone zu dem Bild derselben Zone überzugehen, das nach dem anderen Beschaffungsschritt beschafft wurde.

2. Analyseverfahren nach Anspruch 1, **dadurch gekennzeichnet, dass** die Geschwindigkeit des Durchblätterns der Bilder einstellbar ist.

3. Analyseverfahren nach Anspruch 1 oder 2, **dadurch gekennzeichnet, dass** es außerdem einen Schritt des Fortführens des Durchblätterns nach der Analyse, der eine Anomalie aufweisenden Zone der Probe umfasst, wobei der Schritt des Fortführens von dem Beobachter gesteuert wird.

4. Analyseverfahren nach einem beliebigen der Ansprüche 1 bis 3,
**dadurch gekennzeichnet, dass** es einen Schritt des automatischen Anhaltens des Durchblätterns bei einem keine Anomalie aufweisenden Bild oder einem Bild, das Objekten entspricht, die für die Auswertung der Repräsentativität der Probe notwendig sind, umfasst, wobei das Fortführen des Durchblätterns von dem Beobachter nach der Bewertung, dass das Bild keine Anomalie aufweist, gesteuert wird.

5. Analyseverfahren nach einem beliebigen der Ansprüche 1 bis 4,
**dadurch gekennzeichnet, dass** das Übergehen von dem Bild einer Zone gemäß einem Beschaffungsschritt zu dem Bild derselben Zone gemäß einem anderen Beschaffungsschritt durchgeführt wird, wenn eine Anomalie in dem Bild detektiert wurde.

6. Analyseverfahren nach einem beliebigen der Ansprüche 1 bis 5,
**dadurch gekennzeichnet, dass** die Behandlungsschritte der Probe die Schritte der Kolorierung oder der Markierung durch Fluorophore sind.

7. Analyseverfahren nach Anspruch 5, **dadurch gekennzeichnet, dass** das Anzeigen des durch den anderen Beschaffungsschritt beschafften Bildes von dem Anzeigen von Informationen über die angezeigte Zone der Probe und/oder über die Gesamtheit der Probe und/oder über den Patienten, von dem die Probe genommen wurde, begleitet wird.

8. Analyseverfahren nach einem beliebigen der Ansprüche 1 bis 7,
**dadurch gekennzeichnet, dass** es einen Schritt der Vergrößerung eines Bildes umfasst, um die Sichtbarmachung eines Details der angezeigten Zone zu gestatten.

9. Analyseverfahren nach Anspruch 8, **dadurch gekennzeichnet, dass** das Vergrößerungsmaß einstellbar ist.

10. Verfahren zur Herstellung einer virtuellen Analyseplatte einer Probe (2), um ihre Zellanalyse nach dem Analyseverfahren nach einem der Ansprüche 1 bis 9 zu gestatten, folgende Schritte umfassend:
- Präparieren einer Probe (2),
- Durchführen eines ersten Schrittes der Behandlung der Probe, wobei die Behandlung die Markierung der pathologischen Zellen in Bezug auf die anderen Zellen gestattet,
- Durchführen eines zweiten Schrittes der Behandlung der Probe, wobei die Behandlung gestattet, die pathologischen Zellen in Bezug auf die anderen Zellen in unterschiedlicher Weise zu dem ersten Schritt der Behandlung zu markieren,
- Anordnen der Probe (2) auf eine Analyseplatte (6) vor oder nach oder zwischen den Schritten der Behandlung der Probe (2),
**dadurch gekennzeichnet, dass** es außerdem die folgenden Schritte umfasst:
- Durchführen einer ersten Beschaffung von Bildern der auf der Analyseplatte (6) angeordneten Probe (2), um eine Mehrzahl von Bildern zu erhalten, die jeweils eine Zone der Analyseplatte darstellt, wobei die Seite an Seite angeordneten Bilder ein Bild (20) der Gesamtheit der Probe bilden und die Bilder die Detektion von durch den ersten Behandlungsschritt markierten pathologischen Zellen gestatten,
- Durchführen einer zweiten Beschaffung von Bildern der auf der Analyseplatte angeordneten Probe (2), um eine Mehrzahl von Bildern zu erhalten, die jeweils eine Zone der Analyseplatte (6) darstellen, wobei die Seite an Seite angeordneten Bilder ein Bild (20) der Gesamtheit der Probe bilden und die Bilder die Detektion von anderen Zellanomalien als die, die durch den ersten Behandlungsschritt markiert wurden, gestatten,
- wobei die beschafften Bilder eine virtuelle Analyseplatte bilden.

11. Verfahren zur Herstellung nach Anspruch 10, **dadurch gekennzeichnet, dass** es außerdem den Schritt des Übereinanderlegens von Daten der bei der ersten Beschaffung der Bilder beschafften Bilder und Daten der bei der zweiten Beschaffung der Bilder beschafften Bilder umfasst.

12. Verfahren zur Herstellung nach Anspruch 10 oder 11, **dadurch gekennzeichnet, dass** der erste Schritt der Behandlung der Probe eine Fluoreszenzmarkierung ist.

13. Verfahren zur Herstellung nach Anspruch 12, **dadurch gekennzeichnet, dass** der erste Schritt der Behandlung einen Schritt der Einführung von Referenzkugeln in die Probe umfasst, wobei die Kugeln als Zeugen für die Ausrichtung der Beschaffung von Bildern dienen.

14. Verfahren zur Herstellung nach einem beliebigen der Ansprüche 10 bis 13, **dadurch gekennzeichnet, dass** der zweite Schritt der Behandlung der Probe ein Schritt der Papanikolaou-Färbung ist.

15. Verfahren zur Zellanalyse nach einem beliebigen der Ansprüche 1 bis 9, **dadurch gekennzeichnet, dass** sich die Analyse auf einer durch ein Verfahren zur Herstellung nach einem beliebigen der Ansprüche 10 bis 14 erhaltenen virtuellen Analyseplatte abspielt.

## Claims

1. A cell analysis method for a cytological or histological sample (2) placed on an analysis plate (6), comprising the following steps:
- carrying out at least one first processing operation of the sample (2), said processing being adapted so as to allow differentiation of pathological cells from healthy cells of the sample,
- carrying out an acquisition of images of the sample (2) placed on the analysis plate (6) so as to obtain a plurality of images each representing an area of the analysis plate (6), said images set side by side forming an image (20) of the entire sample,
- automatically scrolling all the acquired images of the sample (2) on a display means at a predetermined scrolling rate, said rate being adapted so as to allow an observer to analyse the image and to determine whether the represented sample area comprises potentially pathological cells or not,
- stopping the scrolling if at least one abnormality which may signify the presence of a pathological cell is detected, characterizes in that,
the stopping of the scrolling is carried out automatically following automated analysis of the image, said stopping being carried out if a particular object, defined as being abnormal is detected in the image, and in that two different processing operations are carried out on the sample (2), said processing operations being adapted so as to allow labeling of pathological cells among the cells of the sample, two image acquisition steps being carried out, each acquisition step allowing the detection of abnormalities according to one of the processing operations carried out on the sample, the data of the images acquired by each acquisition step being superimposed so as to allow the observer to switch from the image of an acquired area according to an acquisition step to the image of the same acquired area according to the other acquisition step during the scrolling of the images.

2. The analysis method according to claim 1, **characterized in that** the scrolling rate of the images is adjustable.

3. The analysis method according to claim 1 or 2, **characterized in that** it further comprises a step for restarting the scrolling after analysis of the area of the sample having an abnormality, said restarting step being controlled by the observer.

4. The analysis method according to any of claims 1 to 3, **characterized in that** it comprises a step for automatically stopping the scrolling on an image which does not have any abnormality or corresponding to objects required for evaluating the representativity of the sample, the restarting of the scrolling being controlled by the observer after validation that the image does not have any abnormality.

5. The analysis method according to any one of claims 1 to 4, **characterized in that** the switching from the image of one area according to an acquisition step to the image of the same area acquired according to the other acquisition step is accomplished when an abnormality has been detected in the image.

6. The analysis method according to any one of claims 1 to 5, **characterized in that** the processing steps are steps for staining or labeling of the sample with fluorophores.

7. The analysis method according to claim 5, **characterized in that** the display of the acquired image according to the other acquisition step is accompanied by display of information on the displayed sample area and/or on the entirety of the sample and/or on the patient on which the sampling was carried out.

8. The analysis method according to any of claims 1 to 7, **characterized in that** it comprises a step for enlarging an image in order to allow the viewing of a detail of the displayed area.

9. The analysis method according to claim 8, **characterized in that** the enlargement rate is adjustable.

10. A method for preparing a virtual analysis plate for a sample (2) with view to allowing its cell analysis according to the analysis method according to any of claims 1 to 9, said method comprising the following steps:
- preparing a sample (2),
- carrying out a first step for processing the sample, said processing allowing the labeling of pathological cells relatively to the other cells,
- carrying out a second step for processing the sample, said processing allowing the labeling of pathological cells relatively to the other cells, in a different way from the first processing step,
- depositing the sample (2) on an analysis plate (6) before or after or between the steps for processing the sample (2),
**characterized in that** it further comprises the following steps:
- carrying out a first acquisition of images of the sample (2) placed on the analysis plate (6) so as to obtain a plurality of images each representing an area of the analysis plate, said images set side by side forming an image (20) of the entire sample, said images allowing detection of the pathological cells labeled by the first processing step,
- carrying out a second acquisition of images of the sample (2) placed on the analysis plate (6) so as to obtain a plurality of images each illustrating an area of the analysis plate (6), said images set side by side forming an image (20) of the entire sample, said images allowing the detection of cell abnormalities other than those labeled by the first processing step,
- said acquired images forming a virtual analysis plate.

11. The preparation method according to claim 10, **characterized in that** it further comprises a step for superimposing the data of the images acquired during the first acquisition of the images and those of the images acquired during the second acquisition of the images.

12. The preparation method according to claim 10 or 11, **characterized in that** the first step for processing the sample is a fluorescence labeling step.

13. The preparation method according to claim 12, **characterized in that** the first processing step comprises a step for introducing reference beads into the sample, said beads being used as controls for the focusing of the image acquisition.

14. The preparation method according to any of claims 10 to 13, **characterized in that** the second step for processing the sample is a Papanicolaou staining step.

15. The cell analysis method according to any of claims 1 to 9, **characterized in that** the analysis is accomplished on a virtual analysis plate obtained by a preparation method according to any of claims 10 to 14.
